# EUROPEAN PATENT APPLICATION

(11) **EP 1 717 811 A2**
(43) Date of publication of application: **02.11.2006**
(21) Application number: 06003052.5
(22) Date of filing: 15.02.2006
(51) Int. Cl.: G11B 27/36, G11B 20/18

(54) **Method and apparatus for time correlating deffects found on hard disks**

(30) Priority: 28.04.2005 US 116553
(71) Applicant: Agere Systems, Inc., Allentown, PA 18109 (US)
(72) Inventor: Ahmed, Ali. U., Macungie Pennsylvania 18062 (US); Brink, Robert D., Coopersburg Pennsylvania 18036 (US); Fernandez, Nelson L., Macungie Pennsylvania 18062 (US)
(74) Representative: Schoppe, Fritz

(57) **Abstract**

A hard disk drive system (50) is configured with logic that time correlates grown defects. The hard disk drive system (50) time correlates grown defects by associating each occurrence of a grown defect with a time stamp. When the hard disk drive system (50) receives a read defect data command sent by the host processor (30), the hard disk drive system (50) returns time correlated grown defect information to the host processor (30). The host processor (30) preferably executes a software program that processes the time correlated grown defect information to determine any changes in the number of grown defects that are occurring as a function of time.

## Description

### TECHNICAL FIELD OF THE INVENTION

The invention relates to hard disk drive systems, and more particularly, to time correlating grown defects found on a hard disk of a hard disk drive system.

### BACKGROUND OF THE INVENTION

A hard disk of a hard disk drive storage system is generally a rigid rotating platter having a planar magnetic surface on which digital data is stored. When hard disks are manufactured, they often have defective areas on them that cannot be used to store information. The defects typically occur in blocks, each of which typically corresponds to 5 bytes.

After hard disks are manufactured, and prior to shipment to the customer, the hard disks normally are tested to determine the number and location of defective blocks on the disks. Defective blocks that are present on a disk before it is shipped to the customer are called "primary" defects. Blocks on a disk that become defective after it has been placed in operation are called "grown" defects.

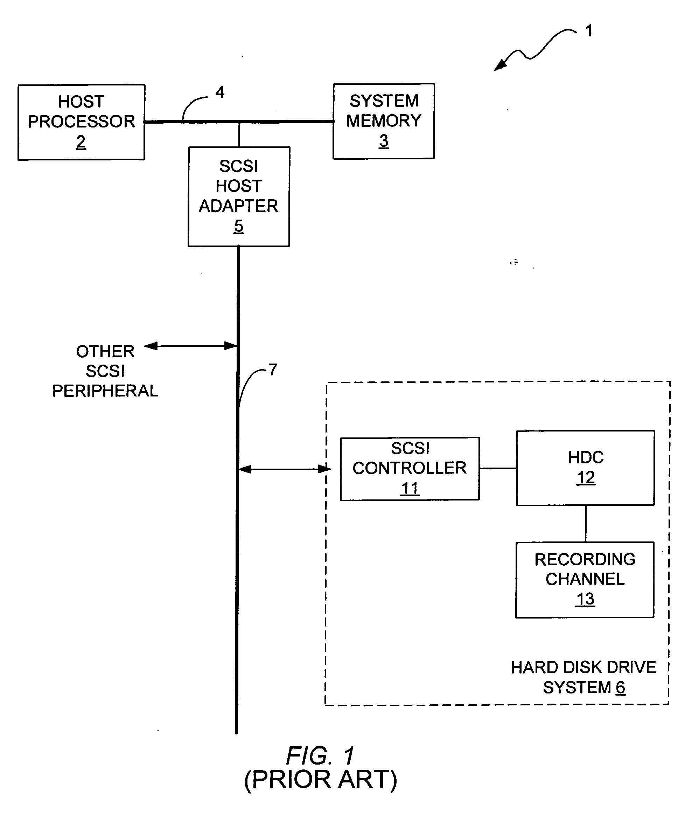

Hard disk drive systems typically include a mechanism that detects defective blocks on the disk and reports the defective blocks upon being queried by a source that is external to the disk drive system, such as, for example, a host processor that is interfaced to the disk drive system by a Small Computer System Interface (SCSI). Fig. 1 illustrates a block diagram of a known computer system 1 that includes a host processor 2, a system memory device 3, a system bus 4 that connects the host processor 2 to the system memory device 3, a SCSI host adapter 5, a hard disk drive system 6, and a SCSI bus 7 that connects the SCSI host adapter 5 to the hard disk drive system 6.

The hard disk drive system (HDDS) 6 typically includes a controller 11 (e.g., a SCSI controller), a hard disk controller (HDC) 12 and a recording channel 13. The recording channel 13 typically includes physical and electrical components, such as, for example, the read/write channels and magnetic recording head (not shown), the read/write head armature (not shown), the hard disk (not shown), and the pre-amplifier (not shown).

The HDDS driver software program allows various hard disk drive system parameters, such as a defective block parameter, for example, to be accessed. The manner in which such a driver program can be used to access a defective block parameter will now be described with reference to Fig. 1.

When the driver program is executed by the host processor 2, the host processor 2 sends a "READ DEFECT DATA" command over system bus 4 to SCSI host adapter 5. The SCSI host adapter 5 translates the command into a SCSI command and sends the SCSI command over the SCSI bus 7 to the SCSI controller 11 of the disk drive system 6. Upon receiving the command, the SCSI controller 11 queries the HDC controller 12, which controls the writing and reading of information to and from the recording channel 13. In response to the query from the controller 11, the HDC 12 sends a response to the SCSI controller 11. The SCSI controller 11 transmits the response over the SCSI bus 7 to the SCSI host adapter 5, which translates the SCSI response into the language of the HDDS driver program and sends the translated response to the host processor 2.

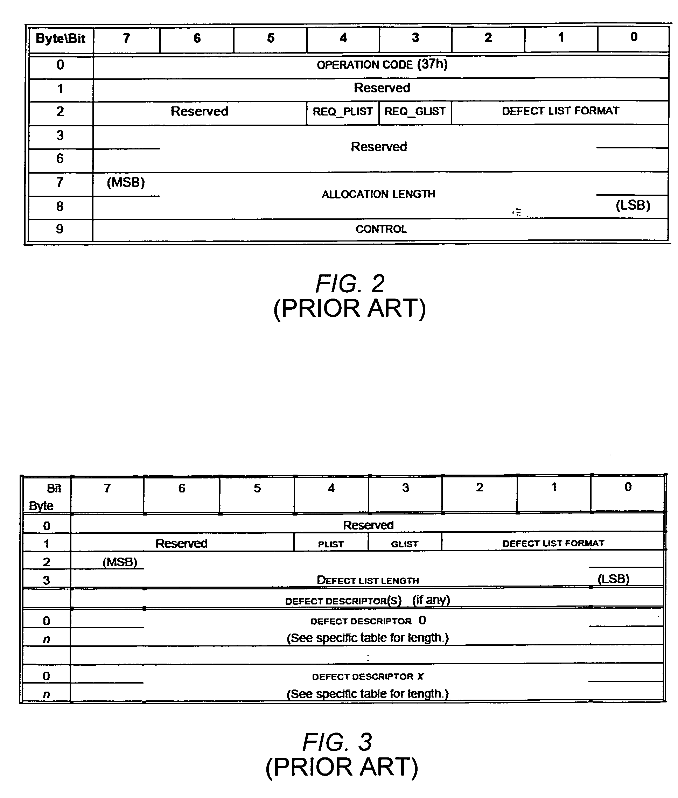

Fig. 2 illustrates a SCSI Command Descriptor Block (CDB) for "READ DEFECT DATA" issued by a host processor. Byte 0 corresponds to the byte that identifies the operation code associated with the command. Byte 1 is reserved. Byte 2 has three bits that are reserved, one bit that identifies the command as a command to check the number of primary disk defects, one bit that identifies the command as a command to check the number of grown disk defects, and three bits that are used to indicate a defect list format.

The available defect list formats are described below in table 1. The defect list format field describes to the HDDS the format in which the HDDS must return the data.

**Table 1**

| **Format Type** | **Description** |
|---|---|
| 000b | Short block format address descriptor |
| 011 b | Long block format address descriptor |
| 100b | Bytes from index format address descriptor |
| 101 b | Physical sector format address descriptor |
| 110b | Vendor-specific |
| All others | Reserved |

If the "REQ_PLlST" is asserted (bit 4), the addresses of the primary defective blocks contained on the hard disk are to be returned in a list to the host processor in a format as requested by the host setting the bits 0, 1, and 2 of byte 2 ("DEFECT LIST FORMAT") according to table 1. If "REQ_GLIST" is asserted (bit 3), the addresses of the grown defective blocks contained on the hard disk are to be returned in a list to the host processor in a format as requested by the host setting the bits 0, 1, and 2 of byte 2 (DEFECT LIST FORMAT") according to table 1.

Fig. 3 illustrates typical SCSI response data that is sent to the host processor 2 by the HDDS 6 in response to the CDB shown in Fig. 2 being sent by the host processor 2 to the HDDS 6. The response data includes a "DEFECT LIST LENGTH" field, which is an integer value that represents the number of defect entries contained in the list. The list includes defect descriptors "DEFECT DESCRIPTOR 0" to "DEFECT DESCRIPTOR n", which correspond to the addresses of the defects.

One of the disadvantages of the existing response data format shown in Fig. 3 is that the information contained in the response does not provide grown defects as a function of time. A user or a hardware controller generally cannot ascertain the health of the hard disk solely based on the number and/or location of defective blocks contained on the hard disk. For example, the user cannot ascertain whether or not the hard disk is about to crash based on the knowledge that the hard disk has 5 or 500 grown defect blocks. The existing response provides information that can lead to a determination that a hard disk drive has lost capacity, but this information is not sufficient to establish how fast capacity is being lost due to the increase in grown defects.

Attempts have been made to provide technology that makes it easier to diagnose hard disk drive systems. Self-monitoring, analysis and reporting technology (S.M.A.R.T.) is disk drive system monitoring and reporting technology that, when coupled with supporting software, enables the reliability of a disk drive system to be predicted and reported. S.M.A.R.T. technology typically monitors certain parameters and determines when a threshold condition has occurred. When a threshold condition occurs, the occurrence of the threshold condition is reported to the end user to enable the end user to take action to prevent failure (e.g., backup data on another storage device).

Although S.M.A.R.T. technology has proven effective at enabling certain types of disk drive system failures to be predicted, it does not implicitly or explicitly report information about grown defects as a function of time over SCSI bus that would enable a typical customer to determine whether or not a disk drive system is about to fail as a result of grown defects. A rapid increase over time in the number of grown defects contained on a hard disk can be an indicator of loss of capacity and performance, and that hard disk failure is imminent. If such information were available to the customer, the customer could take proactive steps to prevent valuable data from being lost. Accordingly, a need exists for a method and apparatus for recording the occurrence of grown defects and the points in time at which the grown defects occurred, and for reporting the recorded information to a host system.

### SUMMARY OF THE INVENTION

The invention provides a method and an apparatus for registering a point in time at which a memory element of a hard disk becomes defective. The apparatus comprises first logic configured to detect one or more occurrences of defective memory elements of a hard disk, second logic configured to record each respective time event at which a respective occurrence of a defective memory element was detected by the first logic, and third logic configured to report the recorded information to a host system.

The method comprises detecting when one or more memory elements of a hard disk become defective, recording each respective time event at which a respective defective memory element was detected, and reporting the recorded information to the host system.

The invention also provides a computer program for recording time events at which defective memory elements of a hard disk occur and for reporting the recorded information. The computer program is embodied on a computer-readable medium and comprises a first code segment for detecting when one or more memory elements of a hard disk become defective, a second code segment for recording each respective time event at which a respective defective memory element was detected, and a third code segment for reporting the recorded information to a host system.

The invention also provides a computer program for generating a request to obtain information from a hard disk drive storage system. The information requested relates to detected occurrences of defective memory elements and time events at which the occurrences of defective memory elements were detected. The program comprises a first code segment for generating a request for time correlated defect information from a hard disk drive storage system and a second code segment for processing a response to the request received from the hard disk drive storage system. The response includes a list of detected defective memory elements of a hard disk and points in time at which the defective memory elements were detected.

These and other features and advantages of the invention will become apparent from the following description, drawings and claims.

### BRIEF DESCRIPTION OF THE DRAWINGS

Fig. 1 illustrates a block diagram of a known computer system having logic for detecting and reporting defective memory blocks of a hard disk.

Fig. 2 illustrates a typical SCSI command data descriptor block (CDB) for "READ DEFECT DATA" issued by a host processor.

Fig. 3 illustrates a typical SCSI response data format that is returned to a host processor by a hard disk drive system in response to the request CDB shown in Fig. 2 being sent by the host processor to a hard disk drive system.

Fig. 4 illustrates a block diagram of a computer system 20 in accordance with an embodiment of the present invention for time correlating grown defects.

Fig. 5 illustrates a SCSI CDB for "READ DEFECT DATA" modified in accordance with the invention.

Fig. 6 illustrates the format of a response to the CDB shown in Fig. 5, which is identical to the response format shown in Fig. 3 except that each defect descriptor that corresponds to a grown defect block includes a time stamp that indicates the point in time at which the grown defect occurred.

Fig. 7 illustrates a flow chart of the method of the invention in accordance with an embodiment.

### DETAILED DESCRIPTION OF THE PREFERRED EMBODIMENT

In accordance with the present invention, a hard disk drive system is configured with logic that time correlates grown defects. Preferably, the hard disk drive system time correlates grown defects by associating each occurrence of a grown defect with a time stamp. When the hard disk drive system receives a read defect data command sent by the host processor, the hard disk drive system returns time correlated grown defect information to the host processor. The host processor preferably executes a software program that processes the time correlated grown defect information to determine any changes in the number of grown defects that are occurring as a function of time. Preferably, the host processor causes the relationship of grown defects as a function of time to be displayed on a display monitor so that a user can determine the health of the disk drive system, e.g., whether a rapid increase in the number of grown defects occurring over time indicates that a failure of the disk drive system is imminent.

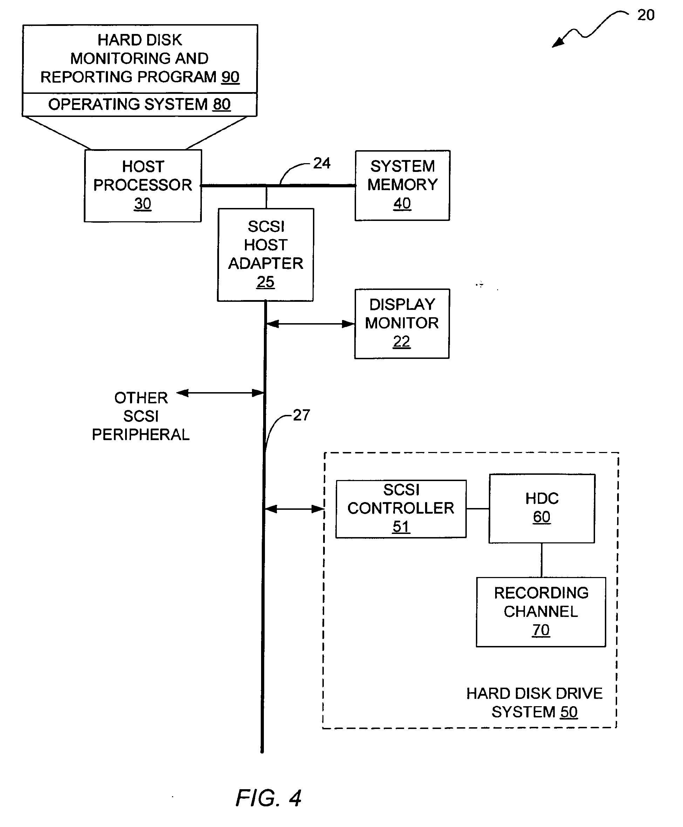

Fig. 4 illustrates a block diagram of a computer system 20 in accordance with an embodiment of the present invention for time correlating grown defects. The computer system 20 typically includes a host processor 30, a system memory device 40, a system bus 24, a SCSI host adapter 25, a SCSI bus 27, and a hard disk drive system 50. The system bus 24 connects the host processor 30 to the system memory device 40 and to the SCSI host adapter 25. The SCSI bus 27 connects the SCSI host adapter 25 to the hard disk drive system 50.

The hard disk drive system 50 of the invention typically includes a SCSI controller 51, an HDC 60 and a recording channel 70. The recording channel 70 typically includes read/write channels and magnetic recording head (not shown), a read/write head armature (not shown), a hard disk (not shown), and a pre-amplifier (not shown).

The HDC 60 will typically include the logic of the invention that time correlates grown defects by time stamping grown defects as they occur, recording the time stamped grown defects, and reporting the recorded time stamped grown defect information to a host system. The logic for performing these functions will typically be implemented in firmware in the HDC 60, although it may be implemented in one or more other components of the hard disk drive system 50, such as in one or more components of the recording channel 70, for example. The invention is not limited with respect to the location at which this logic is physically implemented in the hard disk drive system 50. For purposes of describing an exemplary embodiment of the invention, it will be assumed that the logic of the invention for time correlating grown defects is implemented in the HDC 60.

Whenever a grown defect occurs on the hard disk, the recording channel 70 reports the occurrence to the HDC 60. The capability of hard disk drive systems to report the occurrence of a grown defect is not new. Known hard disk drive systems have this capability, as demonstrated above by the description of Fig. 3. In accordance with the invention, the HDC 60 comprises logic that detects the occurrence of a grown defect and logic that time stamps each grown defect occurrence and registers the time stamped grown defect occurrences in a defect list that is stored in the hard disk drive system 50.

Each grown defect corresponds to a defective memory element of the hard drive. Typically, a grown defect occurs when a memory element corresponding to a block of memory of the hard disk becomes defective. However, the invention is not limited with respect to the size of the memory element of the hard disk that has to be defective in order for a grown defect to have occurred.

The defect list containing the time stamped grown defects may be stored on the hard disk itself or in some other memory device of the hard disk drive system 50. The host processor 30 retrieves the defect list and processes it to determine the health of the hard disk drive system 50. The operations of the host processor 30 are controlled by the operating system (OS) 80 of the host processor 30. The OS 80 may include code that instructs the host processor 30 to retrieve and process the defect list containing the time stamped grown defect occurrences from the hard disk drive system 50. Alternatively, the host processor 30 may execute a hard disk monitoring and reporting software program 90 that instructs the host processor 30 to retrieve and process the defect list. The OS 80 or the program 90 may instruct the host processor 30 to display information relating to the time stamped grown defect occurrences on a display monitor 22 so that an end user can view the information and decide whether to take action to prevent data stored on the hard disk from being lost.

The request issued by the host processor 30 may be similar to the request CDB shown in Fig. 2. However, in accordance with an embodiment of the invention, the request shown in Fig. 2 is modified to indicate that time stamps are to be included in the response to the request. For example, bit 5 of byte 2, which is currently part of "Reserved" bits under the current SCSI protocol, may be used to indicate that time stamp information is to be returned to the host processor 30. In accordance with this exemplary embodiment of the invention, bit 5 of byte 2, which would correspond to Time Stamp (TS), would be set to one in the request to indicate that time stamped grown defect information is to be returned to the host processor 30. HDDSs that do not support such a feature will typically return "error in CDB" with "illegal parameter in the field".

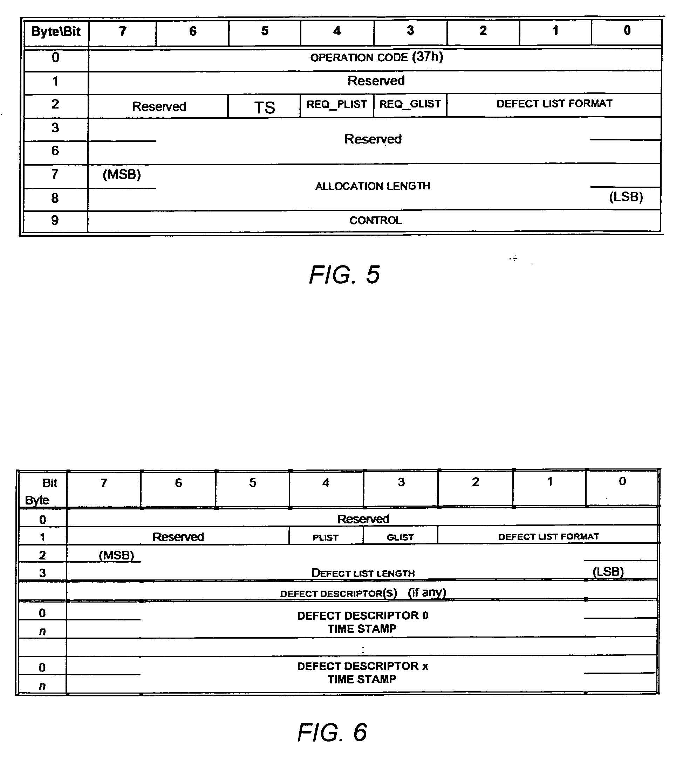

Fig. 5 illustrates the SCSI CDB for a "READ DEFECT DATA" request in accordance with an exemplary embodiment of the invention. Bits 5, 6 and 7 of byte 2 currently are reserved under the current SCSI protocol. One example of requesting a time stamped grown defect list in accordance with the invention will have bit 5 of byte 2 ("TS") set to one. This setting will indicate that a grown defect list that includes time stamp information is to be returned to the host processor 30.

It should be noted that Fig. 5 is merely an example of the manner in which an existing request can be modified in accordance with the invention. Other bits in the SCSI request command can be used for this purpose.

The response to the request shown in Fig. 5 may have the response format shown in Fig. 6. The response format shown in Fig. 6 is identical to the response format shown in Fig. 3, except that each defect descriptor that corresponds to a grown defect block includes a time stamp that indicates the point in time at which the grown defect occurred.

The invention is not limited to use with the SCSI protocol. Other protocols, including the Serial Attached SCSI (SAS) protocol, the Fibre Channel protocol, the Advanced Technology Attachment (ATA) protocol, the Advanced Technology Attachment Packet Interface (ATAPI) protocol, the Serial ATA (SATA) protocol, the Universal Serial Bus (USB) protocol, and the Institute of Electrical and Electronics Engineers (IEEE) 1394 protocols, for example, are also suitable for use with the invention. These other protocols use requests and responses that are different from those described above for the SCSI protocol. However, those skilled in the art will understand, in view of the description provided herein, the manner in which those protocols can be modified to enable time stamped grown defects to be retrieved by the host system. Therefore, a description of the manner in which those protocols can be modified to achieve the goals of the invention will not be provided herein in the interest of brevity.

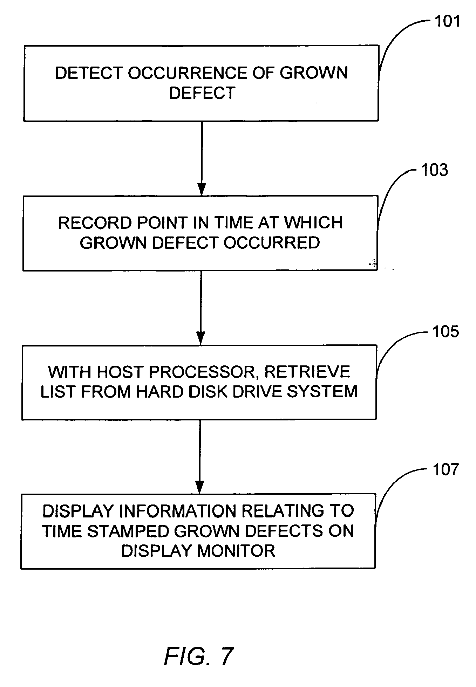

Fig. 7 illustrates a flowchart that represents the method of the invention in accordance with an embodiment for time correlating grown defects found on a hard disk. The occurrences of grown defects are detected, as indicated by block 101. The points in time at which, or time intervals during which, the grown defects occurred are recorded, as indicated by block 103. Preferably, each time a grown defect occurs, the grown defect is recorded in a list along with a time stamp that is relative to "HDDS cumulative power on hours". As described above, the hard disk drive system 50 maintains the list of the grown defect occurrences and their respective time stamps. The host processor 30 retrieves the list from the hard disk drive system 50, as indicated by block 105. The host processor 30 may cause the list, or information associated with the list, to be displayed on display monitor 22, as indicated by block 107.

In addition or in lieu of displaying the list or information associated with the list, the host processor or OS may cause some other action to occur based on the information. For example, the host processor may evaluate the list and cause data stored on the hard disk to be backed up in a backup storage element (not shown) when the host processor determines that information on the list indicates that failure of the hard disk is imminent. Other actions are also possible, such as, for example, in a system that includes multiple hard disks, halting storing information on a disk that is about to fail and causing the information to be stored instead on a different hard disk of the system.

Also, although the invention preferably uses time stamps to time correlate defects, it is not necessary, although it is preferable, to record an exact instant in time at which a defect occurred. Instead, a time interval during which a defect occurred can be recorded. The term "time event" as that term is used herein means an instant in time as well as a time interval. A time interval may include multiple instants in time. Therefore, the phrase "a time event at which" a defective memory element is detected can mean an exact instant in time at which a defect occurs or is detected as well as a time interval during which a memory element becomes defective or the defect is detected.

It should be noted that the invention has been described with reference to some preferred and exemplary embodiments and that the invention is not limited to these embodiments. Modifications may be made to the embodiments shown herein and all such modifications are within the scope of the invention.

## Claims

1. An apparatus for registering a time event at which a memory element of a hard disk becomes defective, the apparatus comprising:
first logic (60) configured to detect one or more occurrences of defective memory elements of a hard disk;
second logic (60) configured to record each respective time event at which a respective occurrence of a defective memory element was detected by the first logic; and
third logic (60) configured to report the recorded time events at which defective memory elements were detected.

2. The apparatus of claim 1, wherein the first, second and third logic are part of a hard disk drive storage system (50).

3. The apparatus of claim 2, wherein the defective memory element corresponds to a grown defect.

4. The apparatus of claim 2, further comprising:
a processor (30) configured to generate and send a request to the hard disk drive storage system (50) that requests information relating to occurrences of defective memory elements and time events at which the occurrences of the defective memory elements were detected, the hard disk drive storage system (50) responding to the request with a response that includes a list of occurrences of defective memory elements and respective time events at which the occurrences of the defective memory elements were detected, the third logic reporting (60) the list to the processor (30).

5. The apparatus of claim 4, further comprising:
a display monitor (22) for displaying information obtained from said list relating to occurrences of one or more defective memory elements of the hard disk and time events at which the occurrences of the defective memory elements were detected.

6. A method for registering time events at which a memory element of a hard disk becomes defective, the method comprising:
detecting when one or more memory elements of a hard disk become defective;
recording each respective time event at which a respective defective memory element was detected; and
reporting the recorded time events at which defective memory elements were detected.

7. The method of claim 6, wherein the steps of detecting, recording and reporting are performed by logic of a disk drive storage system.

8. The method claim 6, wherein the defective memory element corresponds to a grown defect.

9. The method of claim 7, further comprising:
in a processor, generating and sending a request to the hard disk drive storage system that requests information relating to occurrences of defective memory elements and time events at which the occurrences of the defective memory elements were detected; and
in the hard disk drive storage system, generating a response to the request, the response including a list of occurrences of defective memory elements and respective time events at which the defective memory elements were detected.

10. The method of claim 9, further comprising:
in said processor, receiving and processing the list; and
in a display device, displaying information obtained from said table relating to occurrences of one or more defective memory elements of the hard disk and time events at which the occurrences of defective memory elements were detected.
